(19) Europäisches Patentamt
European Patent Office
Office européen des brevets

(11) **EP 1 253 436 A1**

(12) **DEMANDE DE BREVET EUROPEEN**

(43) Date de publication:
**30.10.2002 Bulletin 2002/44**

(51) Int Cl.⁷: **G01S 5/12**, H04Q 7/38

(21) Numéro de dépôt: **02291004.6**

(22) Date de dépôt: **19.04.2002**

| | |
|---|---|
| (84) Etats contractants désignés:<br>**AT BE CH CY DE DK ES FI FR GB GR IE IT LI LU**<br>**MC NL PT SE TR**<br>Etats d'extension désignés:<br>**AL LT LV MK RO SI**<br><br>(30) Priorité: **27.04.2001 FR 0105733**<br><br>(71) Demandeur: **Thales**<br>**75008 Paris (FR)** | (72) Inventeurs:<br>• **Morgand, Philippe, Thales, Intellectual Property**<br>**94117 Arceuil Cedex (FR)**<br>• **Monod, Jean-Jacques, Thales,**<br>**Intellectual Property**<br>**94117 Arceuil Cedex (FR)**<br><br>(74) Mandataire: **Dudouit, Isabelle**<br>**Thales Intelectual Property**<br>**13, avenue Président Salvador Allende**<br>**94117 Arcueil Cedex (FR)** |

(54) **Système et procédé de localisation de radiomobiles en dehors de la couverture d'un réseau cellulaire**

(57) Procédé de détection d'un ou de plusieurs mobiles à partir d'un dispositif de recherche situé en altitude par rapport au mobile comportant au moins une étape de simulation d'un réseau cellulaire afin d'éveiller un ou plusieurs mobiles en veille à portée des signaux de simulation et en ce qu'il détermine au moins un paramètre représentatif d'un ou de plusieurs signaux émis par le ou les mobiles éveillés.

Application aux réseaux GSM ou UMTS

FIG.2

EP 1 253 436 A1

## Description

L'invention concerne un système et un procédé permettant de détecter et/ou de localiser un ou plusieurs radiomobiles en utilisant un dispositif de recherche situé à une certaine hauteur du ou des radio mobiles à localiser.

L'invention s'applique plus particulièrement dans le cas de la recherche de radiomobiles se trouvant en dehors de la couverture d'un réseau cellulaire ou en limite d'un tel réseau.

Elle s'applique pour un réseau cellulaire GSM (Global System Mobile) ou UMTS (Universal Mobile Telecommunication System).

L'invention permet aussi d'assurer la localisation angulaire d'un radiomobile, tel qu'un téléphone portable ou portatif, GSM. La localisation est effectuée par exemple en trois dimensions afin de connaître la position en site et gisement de la personne équipée du portable.

Le système est notamment conçu pour permettre aux équipes de secours d'intervenir dans les plus brefs délais dans le cas de sauvetages pour des personnes :

- inanimées en montagne suite à un crash d'avion ou à une pratique sportive en zone isolée ou désertique,
- sous avalanche,
- conscientes mais bloquées en raison de mauvaises conditions climatiques dans un abri de fortune ou autre,
- inanimées en mer suite à un retournement de voilier.

L'objet de l'invention s'applique quelque soit l'opérateur national et peut être aisément étendu à tous les pays européens et autres.

Il est connu dans l'art antérieur des systèmes de détection fonctionnant en dehors de la couverture de réseau. Ces systèmes sont portatifs à détection de fréquence. Ils sont basés sur un principe d'émission d'une fréquence balise dont la portée est limitée, ce qui conduit à des détections à proximité.

Il est aussi connu d'utiliser le réseau GSM pour les zones couvertes par le réseau cellulaire. Ces dispositifs réclament la présence de trois BTS (Base Transmitter Station).

Le système et le procédé selon l'invention reposent sur une nouvelle approche et structure qui utilisent un dispositif de recherche comportant un simulateur de réseau cellulaire.

L'invention concerne un procédé de détection d'un ou de plusieurs mobiles à partir d'un dispositif de recherche situé en altitude par rapport au mobile caractérisé en ce qu'il comporte au moins une étape de simulation d'un réseau de communication cellulaire afin d'éveiller un ou plusieurs radiomobiles en veille à portée des signaux simulés (issus de l'étape de simulation) et en ce qu'il détermine au moins un paramètre représentatif d'un ou de plusieurs signaux émis par le ou les mobiles éveillés.

Selon un mode de mise en oeuvre, le simulateur de réseau permet d'éveiller des mobiles situés hors réseau ou en limite de réseau.

Il peut aussi utiliser en limite de réseau une fréquence de secours, cette dernière étant définie par un opérateur.

Le procédé peut déterminer une direction angulaire des signaux émis par le mobile, telle que l'angle de site et/ou l'angle d'azimut.

Le simulateur de réseau de communication cellulaire est par exemple adapté à un réseau de type GSM ou UMTS.

Le simulateur peut modifier les paramètres de la fréquence balise du réseau de communication cellulaire simulé pour forcer le mobile à relancer des procédures de relocalisation par simulation d'un changement de cellule du réseau de communication cellulaire.

La détection des signaux et la goniométrie sont effectuées par exemple sur des signaux de type $S_{GSM}$ : RACH, SDCCH et FACCH ou de type $S_{UMTS}$ : PRACH, DPPCH, échangés entre le mobile et le simulateur de réseau.

Le procédé peut comporter une mesure de distance entre le mobile éveillé et le simulateur de réseau, la mesure de distance étant associée à la mesure de direction angulaire pour déterminer la position du ou des mobiles en veille.

Le procédé s'applique par exemple pour la localisation en trois dimensions d'une personne en difficulté équipée d'un radiomobile en mode veille ou téléphone mobile.

L'invention concerne aussi un système de détection et/ou de localisation d'un ou de plusieurs mobiles en limite ou en dehors de la couverture d'un réseau de communication cellulaire caractérisé en ce qu'il comporte au moins :

- un dispositif permettant de simuler un réseau de communication cellulaire, afin d'éveiller un ou plusieurs mobiles en veille à portée des signaux simulés,
- un dispositif pour détecter les signaux échangés entre un mobile et le simulateur de réseau,
- un dispositif de traitement des signaux échangés.

Le système et le procédé selon l'invention offrent notamment les avantages suivants :

- pouvoir secourir et localiser des personnes situées :

    - en dehors ou en limite de couverture d'un réseau cellulaire, lorsqu'elles sont équipées d'un radiomobile en mode veille, et aussi

- en proximité de réseau cellulaire, moyennant la réservation d'une fréquence spécifique au niveau de l'ensemble des stations de base ou des BTS (Base Transmitter Station) du réseau territoire national ou étranger.

- respecter les règles en vigueur de la protection de la vie privée du citoyen en terme d'identification et de localisation :

    - en laissant la possibilité à un utilisateur de positionner son téléphone mobile à l'arrêt pour les détenteurs de systèmes antérieurs au standard 3G et ne désirant pas se faire localiser,
    - en offrant la possibilité d'employer les services de protection prévus par le standard 3G et qui seront implémentés prochainement dans les futurs équipements,
    - le n°IMSI (International Mobile Subscriber Identifier) représentatif de l'abonné n'est pas extrait et l'identité du propriétaire du mobile n'est connue que des opérateurs.

D'autres avantages et caractéristiques de l'invention apparaîtront mieux à la lecture de la description qui suit où sont proposés des exemples de mise en oeuvre du système et du procédé selon l'invention à titre illustratif, ceci en référence aux figures annexées qui représentent :

- la figure 1 un schéma général de l'ensemble du dispositif de recherche et du mobile à localiser,
- la figure 2, un exemple de système de localisation angulaire,
- la figure 3 le principe d'éveil d'un radiomobile recherché,
- la figure 4 la représentation du principe de localisation angulaire,
- la figure 5 un algorithme d'estimation de direction d'arrivée,
- la figure 6 une structure générale logicielle,
- la figure 7 un exemple de capteur,
- la figure 8 un exemple de structure pour l'application de goniométrie.

Afin de mieux faire comprendre l'objet de l'invention, la description qui suit donnée à titre illustratif et nullement limitatif concerne la détection d'un radiomobile en dehors ou en limite de la couverture d'un réseau cellulaire GSM.

Il est bien entendu que cette description s'étend à tous les réseaux de type cellulaire dans lesquels il existe au moins deux signaux échangés entre un radiomobile et le réseau. Les signaux utilisés par le procédé sont par exemple de type accès ou communication.

Dans le cadre du GSM, le procédé utilise les signaux de type RACH (Random Access Channel), SDCCH (Stand Alone Dedicated Control Channel) et FACCH (Fast Associated Control Channel) qui sont désignés par la référence $S_{GSM}$ dans la suite de la description.

Pour l'UMTS, les signaux utilisés sont PRACH (Packet Random Access Channel) et DPCCH (Dedicated Packet Control Channel) désignés sous la référence $S_{UMTS}$.

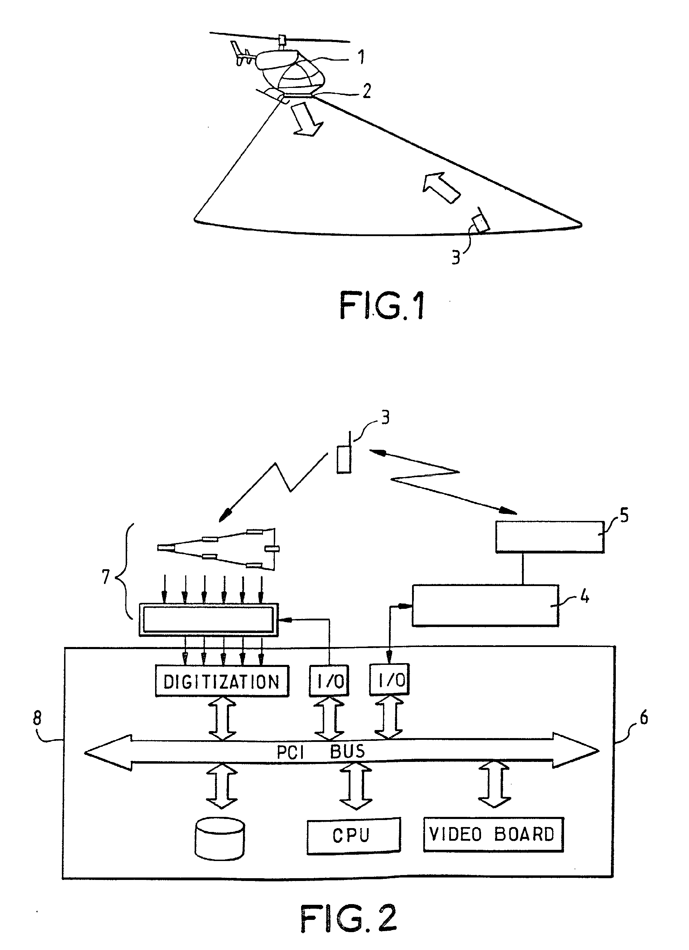

Le principe mis en oeuvre par l'invention est rappelé à la figure 1 qui représente un hélicoptère 1 équipé d'un dispositif de recherche 2 selon l'invention et d'un radiomobile 3 à localiser.

La détection et la localisation angulaire d'un radiomobile en site et gisement nécessite :

- que le radiomobile soit en mode veille,
- un dispositif de recherche comprenant par exemple :

    - un système d'éveil du radiomobile, constitué par exemple d'un simulateur de réseau cellulaire GSM, dénommé dans ce document simulateur de station de base ou SSB,
    - un système de localisation comprenant une antenne de réception et un équipement de traitement de signal permettant de déterminer la direction d'angle d'arrivée en site et en gisement d'un radiomobile.

La figure 2 montre un exemple d'architecture de système dans le cas d'une application GSM. Le simulateur comporte une micro, 4, ou BTS (en abrégé anglo-saxon Base Transmitter Station, format A4), un interface Abis non représenté, une antenne 5 ayant notamment pour fonction d'émettre des signaux simulés vers le mobile en veille que le système cherche à détecter. Le simulateur doit notamment être capable d'assurer une partie des fonctions d'un réseau cellulaire, c'est-à-dire établir une liaison avec un ou plusieurs mobiles, afin que les mobiles présents dans une zone de recherche soient identifiés par le simulateur.

Un PC 6, de type industriel par exemple, est équipé de cartes de traitement d'acquisition et de traitement de données, ainsi que de logiciels adaptés à mettre en oeuvre les étapes du procédé selon l'invention, d'exécuter le traitement des signaux et de gérer et commander les différentes étapes du procédé. Le PC 6 est relié au simulateur de station de base 4.

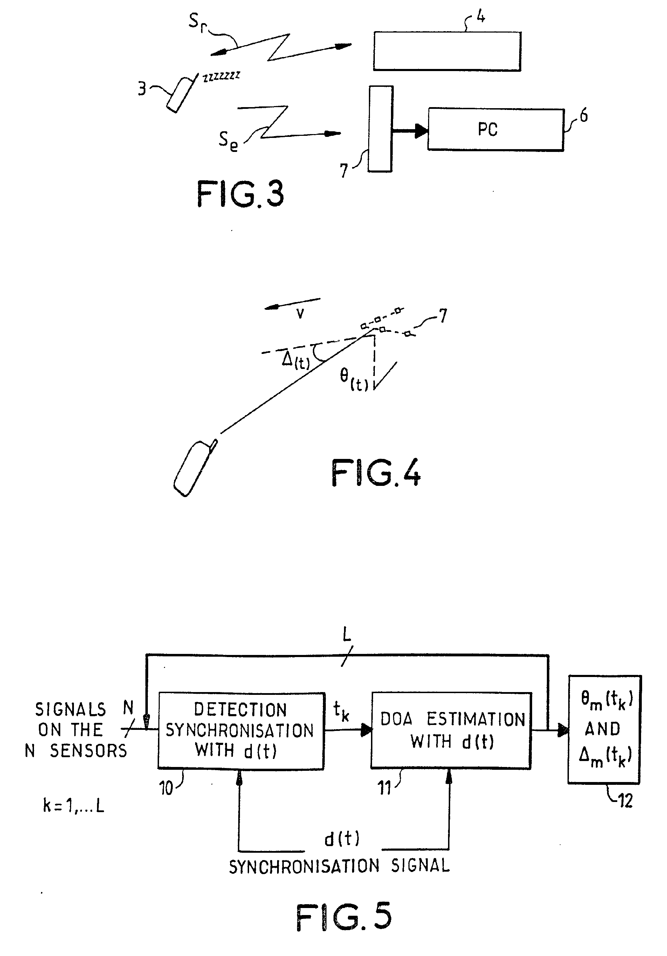

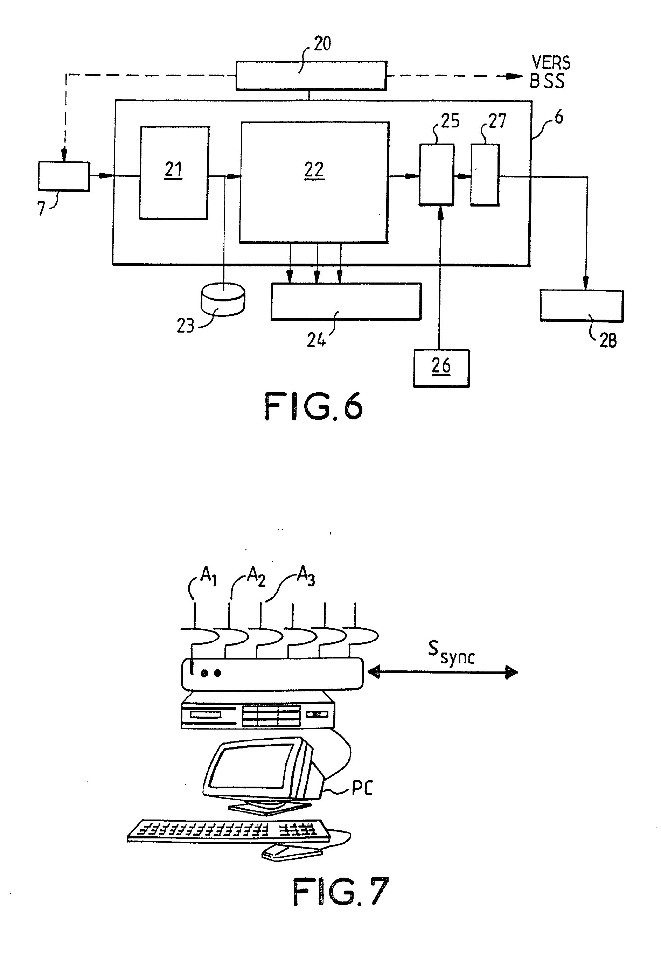

Le dispositif de localisation est composé par exemple d'une antenne 7 passive et de différentes cartes insérées dans le PC. Un exemple de mise en oeuvre des algorithmes de localisation est donné en relation avec les figures 4 et 5.

Le formatage des trames et des slots dans le cadre des applications GSM ou UMTS est assuré par la micro BTS (réseau cellulaire GSM) ou un node B (réseau cellulaire UMTS). Le PC assure le contrôle de la télécommande des procédures et de forçage des paramètres des signaux émis.

Le PC est par exemple de type PC Pentium industriel intégrant des cartes d'acquisition et de traitement de signal permettant de dérouler les algorithmes de mesure sur les signaux $S_{GSM}$ (ou $S_{UMTS}$). Ce calculateur est pourvu d'un logiciel dédié à l'application et développé pour permettre notamment la détection/synchronisation, le dénombrement et la mesure d'arrivée des fronts d'ondes des signaux $S_{GSM}'$ ainsi que l'exploitation des mesures acquises.

Ce logiciel comprend notamment :

- Une application de détection, de tri et de synchronisation des signaux reçus par le dispositif de recherche,
- Une application pour la localisation angulaire comprenant la gestion des mesures angulaires et l'exploitation locale des résultats en vue d'une interprétation aisée par l'opérateur de recherche à bord,
- Une application de synchronisation avec le simulateur SB comprenant la gestion des informations (fréquence,....) fournies et le déclenchement des procédures de réinitialisation,
- Une application système centralisant, si nécessaire, les données en provenance des différentes applications locales précitées.

L'ensemble formé par le simulateur et le système de localisation sont dimensionnés afin d'être installés par exemple sur un hélicoptère ou sur un véhicule de recherche.

La figure 3 représente, pour l'application GSM, le principe d'éveil d'un radiomobile 3 en veille à l'aide du simulateur de la station de base 4.

Le simulateur embarqué est adapté pour assurer en premier lieu l'éveil du mobile. Pour cela, il émet une fréquence balise (connue sous le terme anglais Broadcast Channel), représentative d'un réseau cellulaire. Le train de bursts émis sur une multitrame 51 est constitué d'un canal de correction de fréquence FCCH (abréviation anglo-saxonne de Frequency Correction Channel), d'un canal de synchronisation SCH (abréviation de Synchronisation Channel) et d'un canal diffusé BCCH (Broadcast Control Channel). Dès réception de cette fréquence balise, le radiomobile émet des canaux RACH (Random Access Control).

Suite à l'éveil du radiomobile, le dispositif de localisation 7 et de traitement 6 interceptent les signaux émis par le mobile éveillé.

La figure 4 rappelle les paramètres recherchés pour une localisation angulaire. La localisation d'un mobile téléphonique à partir d'un hélicoptère nécessite de connaître la direction d'arrivée du front d'onde (DOA) en azimut et élévation. L'hélicoptère se déplaçant avec un vecteur vitesse désigné par la flèche référencée $\vec{v}$, les angles $\Delta(t)$ et $\theta(t)$ représentent respectivement les angles de site et d'azimut repérés par rapport à la direction des signaux échangés entre le mobile et le simulateur.

La figure 4 montre l'antenne 7 équipant l'hélicoptère de recherche. Les deux angles sont estimés par interception à partir des signaux transmis au mobile ou émis par ce dernier.

**Mise en oeuvre du procédé de recherche**

Une façon de mettre en oeuvre le procédé selon l'invention consiste par exemple à exécuter les étapes suivantes :

(a) simuler un réseau de communication cellulaire à l'aide du simulateur SB en émettant les paramètres générés habituellement par une cellule d'un réseau donné, ceci dans plusieurs directions afin d'éveiller le ou les mobiles éventuels à localiser,
Le simulateur SB fournit différentes informations au PC qui sont pour l'essentiel : l'information temporelle du début d'émission des procédures de « Broadcast Channel, de Location updating, l'envoi de messages courts (SMS - Short Message Service), la mesure des temps d'avance « TA-timing advance ».
Selon une variante de réalisation, l'équipement de localisation est positionné sur une fréquence faisant office de fréquence balise en l'absence de réseau ou encore sur une fréquence de sauvetage mise à disposition par les opérateurs lorsque le réseau est présent. La fréquence générée par le simulateur de Station de Base est transmise au système de localisation (PC),
(b) solliciter le ou les mobiles en veille, afin que les mobiles qui sont situés dans une zone accessible à la fréquence balise émettent des signaux de type RACH, dès réception de la fréquence balise et/ou durant la procédure de « Location Updating », (mise à jour de la localisation).
Les procédures de « Location Updating » peuvent être initialisées périodiquement. Les périodes de récurrence faibles, par exemple de 1 seconde, sont liées au changement de LAI (Location Area Identification) effectué par le simulateur SSB.
(c) solliciter le ou les mobiles en éveil après procédure de « location updating » et forçage par le simulateur de station de base de procédures répétées de « location updating » assurant le renvoi par le mobile de bursts de type SDCCH,
(d) intercepter les émissions RACH provenant des radiomobiles sur la voie radio à l'aide de l'antenne passive 7,
(e) traiter les signaux RACH interceptés afin d'accéder à un paramètre représentatif du ou des mobiles répondant. Le traitement comporte, par exemple, la datation, la démodulation des paramètres des messages RACH reçus, le tri des signaux RACH à partir de la datation et des données démodulées, la mesure des angles d'arrivée en site et en gisement en mettant en oeuvre des méthodes de goniométrie connues de l'Homme du métier.

Par exemple, le procédé peut utiliser une goniométrie à référence utilisant les séquences de synchronisation GSM et UMTS ou encore une goniométrie directe basée sur l'orthogonalité naturelle des signaux CDMA issus des différents mobiles UMTS.

La localisation des radiomobiles est réalisée à partir d'un ou de plusieurs mesures d'angle d'arrivée en site et gisement (figure 4). Ces angles sont estimés par exemple par les algorithmes de meilleures performances retenus, après détection et synchronisation des signaux reçus par l'antenne passive 7.

Selon un mode de mise en oeuvre du procédé, dans le cas d'une application GSM et afin d'améliorer la précision de localisation par une mesure intégrée sur une ou plusieurs dizaines de bursts, lors de l'étape b), le simulateur de station de base modifiant les paramètres du burst de contrôle du canal ou BCCH de la fréquence balise forcera le radiomobile à relancer des procédures de relocalisation (location updating) par simulation de changement de cellule ou au moyen de tout autre procédé. L'objectif est notamment d'obtenir par interception de la voie montante le nombre de bursts cités précédemment. La détection et la goniométrie de l'interception seront réalisées sur des bursts de type $S_{GSM}$.

Dès la connexion au réseau par l'intermédiaire de la fréquence balise, le mobile réalise une procédure de localisation réseau (location updating). Celle-ci a pour effet de transmettre le numéro d'identification ou IMSI du mobile afin que le réseau puisse associer à ce nouvel IMSI une cellule (Initialisation de la procédure de Handover). Le simulateur embarqué assurera en second lieu la simulation réseau nécessaire à cette procédure de localisation et fournira un numéro d'abonné temporaire TMSI (Temporary Mobile Subscriber Identification) selon les procédures définies par le standard GSM applicables à l'UMTS, par exemple.

Enfin, le simulateur SSB envoie des messages courts. L'établissement de dialogues entre le SSB et le mobile assure l'émission de bursts en liaison montante (liaison du radiomobile vers le système de recherche) de type $S_{GSM}$.

Le message court ou SMS est envoyé par exemple du simulateur SSB vers le mobile afin de :

- rassurer les personnes à secourir dans le cas où elles sont conscientes,
- prévenir les autres personnes sur site, détentrices d'un radiomobile d'une opération de sauvetage en cours.

Les bursts « uplink » ou liaison montante générés par l'envoi de ces messages courts ou SMS seront aussi employés à des fins de goniométrie ou mesures d'incidences d'angles.

Les procédures d'éveil, de location updating et d'envoi de messages courts étant similaires pour le GSM et l'UMTS, le SSB sera identique sur le plan fonctionnel. Seul le type de transmission différera et sera du type FDD/TDMA pour le GSM et FDD/CDMA pour l'UMTS.

La figure 5 illustre un algorithme de détermination des angles d'arrivée.

Les N capteurs de l'antenne reçoivent différents bursts ou signaux RACH provenant d'un ou de plusieurs mobiles éveillés dans la cellule.

Le procédé effectue tout d'abord un tri, 10, des bursts par mobile. Ceci est réalisé par exemple en utilisant les bits de synchronisation d(t) inclus dans les signaux RACH émis par un mobile. Cette étape de tri génère des familles de bursts correspondant au nombre de mobiles présents dans la cellule du réseau cellulaire simulé. A chaque mobile d'indice m correspond un nombre L de bursts reçus à des instants différents, à un burst correspond une valeur de temps de retard tk. Pour un mobile m donné et pour chaque burst émis, le PC détermine la valeur du retard tk. Il détermine aussi, 11, les directions d'arrivée (DOA) et en mettant en oeuvre un logiciel de goniométrie à référence exploitant la synchronisation précédemment effectuée, il en déduit, 12 les valeurs d'angle en site et en élévation, $\Delta m(tk)$, $\theta m$ (tk).

Ces mesures d'angle peuvent être associées à des mesures de distance afin d'obtenir la position réelle du mobile.

Par exemple, une mesure de distance déterminée à partir de la mesure de la hauteur obtenue à l'aide d'un altimètre équipant l'hélicoptère et des angles issus de la goniométrie donne une information précise de la distance dm de l'hélicoptère au mobile.

Une autre manière de procéder fournissant des informations un peu moins précises consiste à effectuer une mesure du paramètre : temps de propagation radiomobile-BTS, ou « Timing advance ». Ces mesures fournies au travers du simulateur SSB sont connues de l'Homme du métier et ne seront pas détaillées.

La figure 6 schématise un exemple de structure générale, matériel et logiciel du dispositif selon l'invention.

Le dispositif comporte une interface utilisateur 20 reliée au PC, à la SSB et aussi à l'antenne de réception des signaux. Le pilotage par PC permet notamment d'assurer un paramètrage en temps réel via l'interface homme-machine.

L'interface permet de transmettre un ordre de calibration ou tarage des antennes au commutateur d'antenne (figure 7).

Au niveau logiciel dans le PC, on distingue

- Un premier bloc 21 d'acquisition des données issues des N capteurs d'antenne et de transposition en bande de base,
- Les signaux issus de ce premier bloc passe dans un deuxième bloc 22 détaillé à la figure 5 permettant la détermination des angles d'arrivée en site et en azimut, ce bloc peut être en liaison avec une mémoire de masse 23 pour stocker les signaux reçus et aussi un écran 24 de visualisation graphique des résultats angulaire convertis sous la forme de plots de visualisation,

Les données fournies à l'application « DOA », bloc 22, sont pour l'essentiel : les datations précises des signaux reçus après tri (RACH et SDCCH) et des résultats de localisation angulaire.

- Un troisième bloc 25 permet de déterminer la distance dm séparant le radiomobile répondant au simulateur à partir de mesures distances fournies par un bloc 26 (altimètre, GPS, timing-advance...),

- Les valeurs d'angle et de distance sont combinées au sein d'un quatrième bloc 27 afin d'obtenir la position du ou des mobiles qui ont été éveillés par la SSB, qui sont ensuite transmises à un dispositif de visualisation 28 de localisation permettant la représentation sur une carte locale des positions déterminées.

## Description du capteur de détection et d'interception des signaux

L'antenne 7 radioélectrique utilisée comme détecteur de signaux est par exemple une antenne triangulaire constituée de N capteurs radioélectriques par exemple six capteurs répartis sur les trois côtés. Celle-ci est disposée sous l'hélicoptère ou encore en frontal du véhicule de recherche. Elle peut aussi être triédrique et constituée de six capteurs répartis sur les trois arrêtes du trièdre. Dans ce cas, l'antenne est disposée de façon conforme au bulbe de pilotage de l'hélicoptère.

Les capteurs radioélectriques constituant ces deux antennes sont par exemple semi-omnidirectionnels afin de limiter les perturbations induites par les réflexions générées par le mobile d'emport. Ils peuvent être constitués de plusieurs capteurs élémentaires bi bande GSM, DCS (Digital Cellular System).

La figure 7 décrit un exemple de structure matérielle d'un capteur de détection des signaux émis notamment par le radiomobile. Il se compose d'un dispositif 7 de réception des signaux échangés entre un mobile et le dispositif de recherche installé sur l'hélicoptère (figure 1), par exemple un réseau antennaire de goniométrie comportant six antennes Ai, un commutateur d'antennes (non représenté) permettant de réaliser le tarage des antennes. Une des six antennes est par exemple utilisée pour synchroniser l'instant où le procédé va déclencher une mesure d'angle ou goniométrie. Il est aussi possible d'utiliser comme signal de synchronisation, le signal Ssync issu du simulateur de station de base (SSB).

L'antenne est par exemple une antenne réseau calibrée. Elle est éventuellement associée à des récepteurs large bande bimode et UMTS équipés de filtres en tête centrés sur les bandes GSM, pour rejeter des émetteurs parasites.

Le commutateur est un dispositif connu de l'Homme du métier qui permet un tarage des voies de réception en amplitude et en phase. Le tarage des voies de réception de l'antenne est par exemple réalisé en utilisant un générateur de fréquences déporté au plus près de l'antenne et assurant l'autocalibration du système de réception jusqu'à la numérisation des signaux.

Le récepteur six voies est par exemple un récepteur de bande instantanée 300 KHz (pour le GSM) (5 MHz pour l'UMTS), muni d'un module de tarage pour la phase et la calibration du capteur.

## Application du procédé selon l'invention à la recherche de personnes hors réseau GSM

La recherche de la ou des personnes détentrices d'un radiomobile s'effectue par exemple à partir d'un véhicule de recherche tel qu'un hélicoptère équipé d'un système de localisation tel que décrit précédemment, à partir d'un point fixe en altitude et à vue directe du lieu de recherche ou d'un véhicule progressant vers la zone de recherche.

En l'absence de connaissance précise du lieu ou de la zone de recherche, le véhicule de recherche effectuera une procédure de lacet afin de couvrir la zone suspectée.

Le système est à même de réaliser et de fournir une mesure angulaire en site et en gisement par exemple toutes les deux secondes. A cette mesure d'angle, il est possible d'associer une mesure de distance dont la précision dépend de la linéarisation du relief de manière à affiner la localisation.

## Application à la recherche de personnes dans ou en limite de couverture du réseau GSM

Des procédures similaires ou identiques sont employées dans ce cas en utilisant comme fréquence de balise de travail une fréquence dite de « sauvetage » ajoutée à l'opérateur à la liste des fréquences employées par les cellules de la zone de recherche.

En conséquence, le SSB pourra forcer un mobile inscrit dans un réseau cellulaire si et seulement si :

- cette fréquence dite de sauvetage (par exemple la 125ème fréquence du plan GSM et UMTS) est déclarée par les stations de base du réseau,

- le niveau de réception de cette fréquence est supérieure au niveau de réception de la fréquence balise de la cellule d'accueil.

Dans le cas contraire, le mobile ne pourra pas être détourné de sa station de base locale. Le système est donc auto-sécurisé par les opérateurs et ne pourra fonctionner que dans des cellules autorisées.

**Description de l'application synoptique DOA**

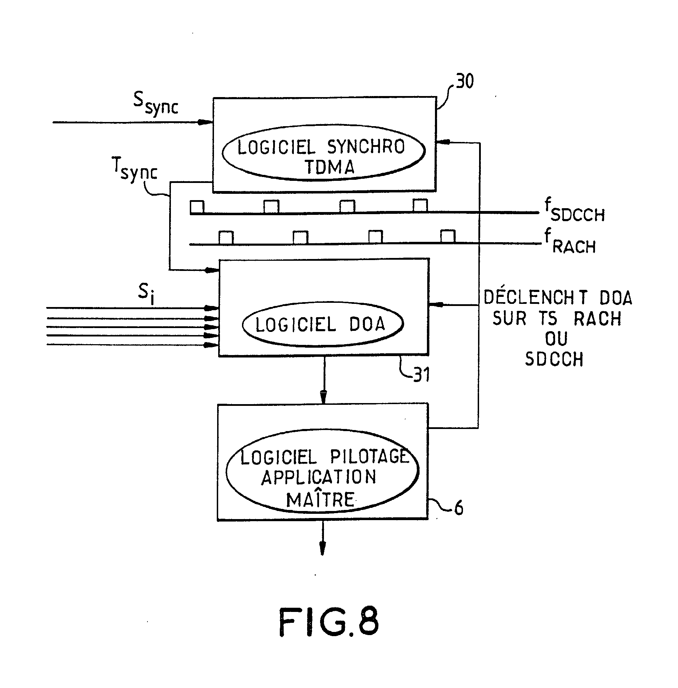

La figure 8 représente une structure possible pour l'application de goniométrie.

Les données fournies par l'application « goniométrie » sont pour l'essentiel :

1 - les datations précises du signal et du tir goniométrique tel que définis précédemment,

2 - la direction angulaire de la source émettant le signal, et éventuellement

3 - la fréquence BCCH, le paramètre « numéro de trame » (nommé « frame number » dans la norme GSM), le paramètre « Time advance » du mobile, par démodulation/décodage des messages radiodiffusés sur les canaux BCCH et par des mesures de synchronisation entre RACH et BCCH,

4 - les paramètres « raison d'appel » (nommé « establishment cause » dans la norme GSM) et « numéro d'appel » (nommé « random access » dans la norme GSM) démodulés dans les signaux RACH permettant d'en effectuer le tri.

La structure comporte une première carte 30 (carte fille), de type deux voies d'acquisition rapide, qui reçoit d'une part le signal Ssync ayant pour fonction de synchroniser les acquisitions du signal Si échangé entre un mobile et le réseau, d'autre part une information du PC 6 équipé d'un logiciel de pilotage ou application maître. Le logiciel est conçu pour piloter l'acquisition du signal échangé sur la fréquence concernée par la cellule sur laquelle est recherché l'appel d'urgence. Cette première carte permet l'acquisition des signaux issus des capteurs et effectue une conversion analogique/numérique. Elle est reliée à une deuxième carte de traitement des signaux.

Une deuxième carte (carte mère) pourvue d'un logiciel de goniométrie reçoit d'une part le top de synchronisation Tsync en provenance de la première carte et les signaux Si reçus par le réseau d'antennes du capteur (figure 7) par exemple six voies. Le logiciel de DOA (détermination de la direction d'arrivée) permet d'obtenir des fichiers contenant les dates et les localisations angulaires des mobiles qui sont transmis au PC 6. Le top de synchronisation Tsync peut être un top synchro SDCCH ou de type goniométrie RACH.

Par exemple, deux cartes mères supportent les cartes filles et assurent les fonctions logicielles temps réel de synchronisation des bursts. La fonction de localisation en site et gisement sera soit assurée par les cartes mères soit par le PC. Les contraintes de localisation temps réel réclame l'utilisation d'un processeur temps réel.

**Revendications**

**1.** Procédé de détection d'un ou de plusieurs mobiles à partir d'un dispositif de recherche situé en altitude par rapport au mobile **caractérisé en ce qu'**il comporte au moins une étape de simulation d'un réseau cellulaire afin d'éveiller un ou plusieurs mobiles en veille à portée des signaux issus de l'étape de simulation et **en ce qu'**il détermine au moins un paramètre représentatif d'un ou de plusieurs signaux émis par le ou les mobiles éveillés.

**2.** Procédé selon la revendication 1 **caractérisé en ce que** le simulateur de réseau permet d'éveiller des mobiles situés hors réseau ou en limite de réseau.

**3.** Procédé selon la revendication 1 **caractérisé en ce qu'**il utilise en limite de réseau une fréquence de secours.

**4.** Procédé selon l'une des revendications 1 à 3 **caractérisé en ce qu'**il détermine une direction angulaire des signaux émis par le ou les mobiles, telle que l'angle de site et/ou l'angle d'azimut.

**5.** Procédé selon l'une des revendications 1 à 4 **caractérisé en ce que** le simulateur est adapté à un réseau cellulaire GSM ou UMTS.

**6.** Procédé selon la revendication 5 **caractérisé en ce que** le SSB modifie les paramètres de la fréquence balise du réseau simulé pour forcer le mobile à relancer des procédures de relocalisation par simulation du changement de cellule.

**7.** Procédé selon l'une des revendications 5 et 6 **caractérisé en ce que** la détection et la goniométrie se font sur des signaux de type $S_{GSM}$ : RACH, SDCCH et FACCH ou de type $S_{UMTS}$ : PRACH, DPPCH échangés entre le mobile et le simulateur de réseau.

**8.** Procédé selon l'une des revendications 4 à 7 **caractérisé en ce qu'**il comporte une mesure de distance entre un mobile éveillé et le simulateur de réseau, la mesure de distance étant associée à la mesure de direction angulaire pour déterminer la position du ou des mobiles en veille.

**9.** Procédé selon l'une des revendications 1 à 8 **caractérisé en ce qu'**il utilise une antenne plane ou triédrique équipée de N capteurs radioélectriques afin de détecter des transmissions issues de mobiles.

**10.** Procédé selon la revendication 9 **caractérisé en ce qu'**il comporte une étape de tarage des voies de réception de l'antenne à l'aide d'un générateur de fréquences déporté au plus près de l'antenne et assurant l'autocalibration du système de réception jusqu'à la numérisation des signaux.

**11.** Application du procédé selon l'une des revendications 1 à 10 à la localisation en trois dimensions d'une personne en difficulté équipée d'un radiomobile en mode veille ou téléphone mobile.

**12.** Système de détection et/ou de localisation d'un ou de plusieurs mobiles en limite ou en dehors de réseau de communication cellulaire **caractérisé en ce qu'**il comporte au moins :

- un dispositif adapté à simuler un réseau de communication cellulaire, afin d'éveiller un ou plusieurs mobiles en veille à portée des signaux issus de la simulation,
- un dispositif pour détecter les signaux échangés entre un mobile et le simulateur de réseau,
- un dispositif de traitement des signaux.

**13.** Système selon la revendication 12 **caractérisé en ce que** le simulateur est adapté à un réseau GSM ou à un réseau UMTS.

**14.** Système selon la revendication 13 **caractérisé en ce qu'**il est adapté à effectuer la détection et la goniométrie des signaux de type $S_{GSM}$ : RACH, SDCCH et FACCH ou de type $S_{UMTS}$ : PRACH, DPPCH échangés entre le mobile et le simulateur de réseau.

**15.** Système selon l'une des revendications 12 à 14 **caractérisé en ce qu'**il utilise une antenne plane ou triédrique équipée de N capteurs radioélectriques afin de détecter des transmissions issues de mobiles.

FIG.1

FIG.2

$S_r$

4

3

zzzzzzz

$S_e$

PC

6

7

# FIG.3

v

$\Delta_{(t)}$

7

$\theta_{(t)}$

# FIG.4

L

SIGNALS
ON THE
N SENSORS

N

DETECTION
SYNCHRONISATION
WITH d(t)

$t_k$

DOA ESTIMATION
WITH d(t)

$\theta_m(t_k)$
AND
$\Delta_m(t_k)$

k = 1,...L

10

11

12

d(t)

SYNCHRONISATION SIGNAL

# FIG.5

FIG.6

FIG.7

$S_{sync}$ ────────────→ ┌─────────────────────────┐ 30
                        │ ╭─────────────────────╮  │
                        │ │  LOGICIEL SYNCHRO   │  │
$T_{sync}$              │ │       TDMA          │  │
                        │ ╰─────────────────────╯  │
                        └─────────────────────────┘

$f_{SDCCH}$

$f_{RACH}$

$S_i$ ─────→ ┌─────────────────────────┐
       ─────→ │ ╭─────────────────────╮  │      DÉCLENCH T DOA
       ─────→ │ │    LOGICIEL DOA     │  │      SUR TS RACH
       ─────→ │ ╰─────────────────────╯  │         OU
       ─────→ └─────────────────────────┘       SDCCH
                                    31

              ┌─────────────────────────┐
              │ ╭─────────────────────╮  │
              │ │  LOGICIEL PILOTAGE  │  │
              │ │    APPLICATION      │  │
              │ │      MAÎTRE         │  │
              │ ╰─────────────────────╯  │ 6
              └─────────────────────────┘
                         ↓

# FIG.8

Office européen
des brevets

**RAPPORT DE RECHERCHE EUROPEENNE**

Numéro de la demande

EP 02 29 1004

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | LUM Z: "COMINT Goes to Cell Hell" JED, JOURNAL OF ELECTRONIC DEFENSE, [en ligne] juin 1998 (1998-06), XP002189979 Extrait de l'Internet: <URL:www.jedonline.com> [extrait le 2002-02-12] * Paragraph "New wrinkles"; paragraph "Getting 'Digi' with it" * | 1,2,4,5, 12,13 | G01S5/12 H04Q7/38 |
| A | KOCKS K: "Cellular Intercept: Not Getting Any Easier" JED, JOURNAL OF ELECTRONIC DEFENSE, [en ligne] août 2000 (2000-08), XP002189980 Extrait de l'Internet: <URL:www.jedonline.com> [extrait le 2002-02-12] * Paragraph "The Searchers", alinéa sur "Spectrum Airborne Surveillance" * | 1,11,12 | |
| A | KANTERAKIS E G ET AL: "Soldier's radio: innovative communication and networking technologies for the individual warrior" TACTICAL COMMUNICATIONS CONFERENCE, 1994. VOL. 1. DIGITAL TECHNOLOGY FOR THE TACTICAL COMMUNICATOR., PROCEEDINGS OF THE 1994 FORT WAYNE, IN, USA 10-12 MAY 1994, NEW YORK, NY, USA,IEEE, US, 10 mai 1994 (1994-05-10), pages 347-354, XP010149109 ISBN: 0-7803-2004-2 * Paragraph "b) Airborne Cellular Platform", page 350 * * figures 1,4 * | 1,11,12 | **DOMAINES TECHNIQUES RECHERCHES (Int.Cl.7)** G01S H04Q |
| A | EP 1 031 847 A (THOMSON CSF) 30 août 2000 (2000-08-30) * abrégé; figures 4,5 * * page 4, ligne 2 - page 5, ligne 10 * | 1,11,12 | |

-/--

Le présent rapport a été établi pour toutes les revendications

| Lieu de la recherche | Date d'achèvement de la recherche | Examinateur |
|---|---|---|
| LA HAYE | 2 juillet 2002 | Niemeijer, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

EP 1 253 436 A1

**Office européen des brevets**

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | GB 2 343 088 A (SAMSUNG ELECTRONICS CO LTD) 26 avril 2000 (2000-04-26) * abrégé; figures 3,9 * * page 18, ligne 12 - page 19, ligne 31 * * page 22, ligne 27 - page 27, ligne 8 * | 1,11,12 | |
| A,P | BALOGH KAROLY: "21st Century possibilities in the mirror of 3rd generation mobile systems" INTERNET PAPER, [en ligne] XP002189981 Hungary Extrait de l'Internet: <URL:http://www.zmne.hu/tanszekek/ehc/konferencia/may/balogh.htm> [extrait le 2002-02-12] * Passage 3.2.2 "UAV Interception" * | 1,11,12 | |

**DOMAINES TECHNIQUES RECHERCHES (Int.Cl.7)**

Le présent rapport a été établi pour toutes les revendications

| Lieu de la recherche | Date d'achèvement de la recherche | Examinateur |
|---|---|---|
| LA HAYE | 2 juillet 2002 | Niemeijer, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 02 29 1004

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-07-2002

| Document brevet cité au rapport de recherche | | Date de publication | Membre(s) de la famille de brevet(s) | | Date de publication |
|---|---|---|---|---|---|
| EP 1031847 | A | 30-08-2000 | FR | 2790098 A1 | 25-08-2000 |
| | | | EP | 1031847 A1 | 30-08-2000 |
| GB 2343088 | A | 26-04-2000 | JP | 3113245 B2 | 27-11-2000 |
| | | | JP | 2000134149 A | 12-05-2000 |

EPO FORM P0460

Pour tout renseignement concernant cette annexe : voir Journal Officiel de l'Office européen des brevets, No.12/82